# FASCICULE DE BREVET EUROPEEN

(11) **EP 3 314 539 B1**
(45) Date de publication et mention de la délivrance du brevet: **31.07.2019**
(21) Numéro de dépôt: 16735914.0
(22) Date de dépôt: 14.06.2016
(51) Int. Cl.: G06K 19/077, G06K 19/07, G09F 3/03, G09F 3/02

(54) **ÉTIQUETTE ANTI-CONTREFAÇON A SÉCURITÉ RENFORCÉE**
FÄLSCHUNGSSICHERES ETIKETT MIT ERHÖHTER SICHERHEIT
ANTI-COUNTERFEIT LABEL HAVING INCREASED SECURITY

(30) Priorité: 29.06.2015 FR 1556076
(43) Date de publication de la demande: 02.05.2018
(73) Titulaire: WISeKey Semiconductors, 13590 Meyreuil (FR)
(72) Inventeur: PIC, Pierre, 13600 Ceyreste (FR)
(74) Mandataire: de Jong, Jean Jacques
(86) Numéro de dépôt international: PCT/FR2016/051434
(87) Numéro de publication internationale: WO 2017/001739

(56) Documents cités:
- EP-A1- 1 835 448
- EP-A1- 1 857 374
- US-A1- 2007 210 173

## Description

### Domaine technique

L'invention est relative aux dispositifs d'indentification sans contact à couplage magnétique en champ proche, par exemple de type NFC (de l'anglais « Near Field Communication »), du type ISO 14443, ou du type ISO 15693, et plus spécifiquement à un dispositif sans contact anti-contrefaçon permettant de garantir l'authenticité du contenu d'une bouteille.

### Arrière-plan

Le brevet US7898422 décrit un dispositif NFC anti-contrefaçon intégré dans un bouchon de bouteille de vin. Le dispositif est agencé pour que l'insertion d'un tirebouchon endommage l'antenne ou le microcircuit de commande.

Lorsque le dispositif est intègre, il peut être interrogé à distance par un lecteur NFC pour lire des informations sur le produit, et également pour confirmer l'authenticité des informations. Lorsque le bouchon a été retiré, le dispositif NFC se trouve endommagé, de sorte que le bouchon ne peut pas être réutilisé pour authentifier le contenu d'une nouvelle bouteille.

La demande de brevet US 2007-0210173 décrit une étiquette RFID en deux parties dont chacune est munie d'un composant RFID indépendant possédant des fonctions cryptographiques. Une rupture de l'étiquette rend inopérant l'un des deux composants RFID. Un lecteur est programmé pour signaler que l'étiquette est intègre s'il parvient à négocier une authentification avec les deux composants RFID de l'étiquette. Si une seule authentification est négociable, c'est que l'étiquette a été rompue.

La demande de brevet EP 1 835 448 décrit une étiquette comprenant au moins deux parties séparables. Chacune des parties comprend un microcircuit et une antenne. Le microcircuit de la première partie est branché au microcircuit de la deuxième partie par une liaison sacrificielle qui traverse une zone de rupture. Les caractéristiques dans le préambule de la revendication 1 sont connues de EP 1 835 448.

### Résumé

De façon générale, on prévoit une étiquette anti-contrefaçon à couplage magnétique en champ proche, comprenant un substrat incluant une zone de rupture ; un microcircuit maître agencé sur le substrat d'un côté de la zone de rupture, et configuré pour être interrogé par un lecteur en champ proche ; un microcircuit esclave agencé sur le substrat de l'autre côté de la zone de rupture ; et une liaison sacrificielle reliant les deux microcircuits, les deux microcircuits étant conçus pour négocier une authentification mutuelle par la liaison sacrificielle.

L'étiquette peut comprendre une antenne agencée pour alimenter le microcircuit maître, la liaison sacrificielle étant conçue pour alimenter le microcircuit esclave à partir du microcircuit maître.

La liaison sacrificielle peut comprendre une piste conductrice configurée en une boucle passant par une deuxième zone de rupture.

La liaison sacrificielle peut comprendre une piste conductrice configurée en créneaux occupant une zone d'intérêt du substrat de manière qu'un transpercement de la zone d'intérêt brise la piste conductrice.

L'étiquette peut comprendre deux plages métalliques disposées en regard sur les faces opposées du substrat dans une zone d'intérêt du substrat, configurées de manière qu'un transpercement de la zone d'intérêt provoque un court-circuit permanent entre les deux plages métalliques, les plages métalliques étant connectées au microcircuit esclave de manière que le court-circuit empêche le fonctionnement du microcircuit esclave.

Les deux microcircuits peuvent être de même type, chacun comprenant deux broches spécifiques conçues pour alimenter un circuit externe lorsque le microcircuit est connecté à une antenne, ou pour recevoir une alimentation externe lorsque le microcircuit n'est pas connecté à une antenne.

Le microcircuit maître peut être conçu pour mettre en oeuvre une technologie de communication en champ proche et le microcircuit esclave être conçu pour mettre en oeuvre une technologie de communication différente.

### Description sommaire des dessins

Des modes de réalisation seront exposés dans la description suivante, faite à titre non limitatif en relation avec les figures jointes parmi lesquelles :
- la figure 1 représente un mode de réalisation d'étiquette NFC anti-contrefaçon pour une bouteille ;
- la figure 2 représente un autre mode de réalisation d'étiquette NFC anti-contrefaçon pour une bouteille ;
- la figure 3 représente un autre mode de réalisation d'étiquette NFC anti-contrefaçon pour une bouteille ; et
- la figure 4 représente une variante de l'étiquette de la figure 2.

### Description de modes de réalisation

Dans le contexte du brevet US 7898422 susmentionné, une fois que la bouteille a été ouverte, le dispositif NFC devient muet. Pourtant, l'utilisateur pourrait souhaiter consulter de nouveau les informations, par exemple pour les partager avec un ami, ou se rendre sur le site web du producteur pour commander de nouvelles bouteilles. Cette fonctionnalité n'est pas envisageable, puisque la sécurité du dispositif anti-contrefaçon repose sur la destruction du dispositif NFC.

Dans la demande de brevet US 2007-0210173 susmentionnée, chaque composant RFID est indépendant et conçu pour communiquer avec un lecteur sans coopération avec le deuxième composant RFID. Le composant RFID qui reste opérationnel après la rupture de l'étiquette peut donc continuer à communiquer des informations au lecteur. Cependant, le système est relativement facile à compromettre du fait que la partie de l'étiquette qui a été séparée peut être réparée individuellement pour rendre son composant RFID de nouveau opérationnel. Il suffit alors de mettre ensemble les deux parties de l'étiquette sur un produit non-authentique pour déjouer une vérification d'authenticité.

On propose ci-après des dispositifs anti-contrefaçon sans contact, par exemple de type NFC, pour des conteneurs, notamment des bouteilles ou des flacons, qui sont difficiles à compromettre tout en offrant une simple lecture d'informations lorsque le conteneur a été ouvert.

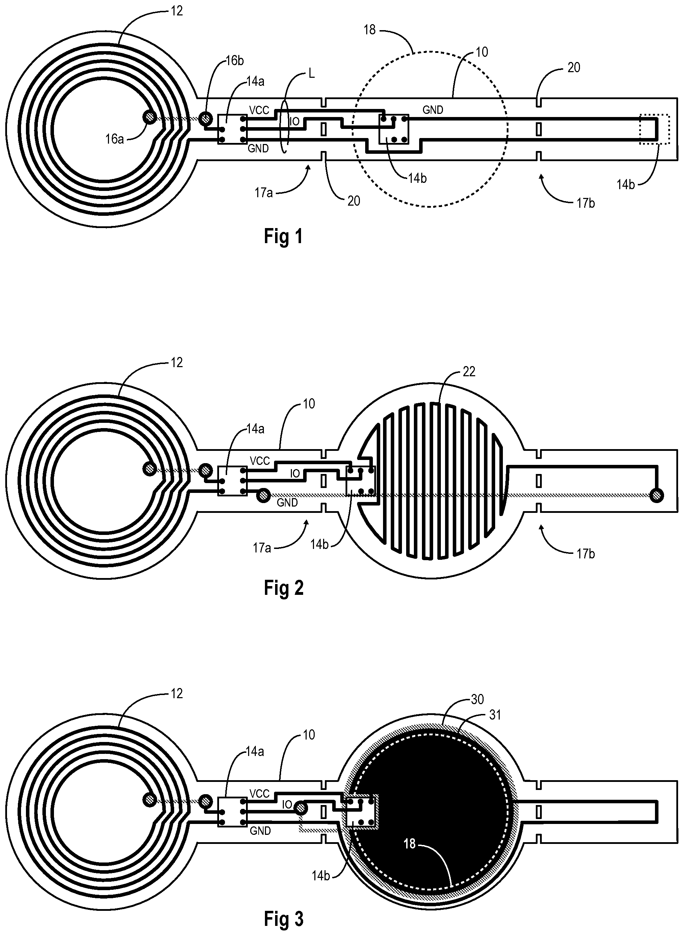

La figure 1 illustre un premier mode de réalisation d'une étiquette NFC anti-contrefaçon à sécurité renforcée. L'étiquette est sous la forme d'un ruban 10 en matière isolante servant de substrat pour former des pistes conductrices selon les techniques courantes de fabrication d'étiquettes RFID. L'une des extrémités du ruban est agrandie pour loger une antenne NFC 12 formée de plusieurs spires d'une piste conductrice.

Un microcircuit 14a est disposé au voisinage du raccord entre le ruban 10 et l'antenne 12 et est connecté aux bornes de l'antenne par une piste sur la même face que l'antenne, et une piste sur la face opposée, rejoignant l'extrémité de la spire intérieure de l'antenne par un via 16a. Un via 16b permet la connexion du microcircuit 14a à la piste de la face opposée.

Plus loin sur le ruban 10, au-delà d'une zone de rupture 17a, est fixé un deuxième microcircuit 14b, microcircuit « esclave » qui peut être de même type que le microcircuit 14a, microcircuit « maître ». Les deux microcircuits peuvent être du type commercialisé sous la dénomination VaultIC™ 152 par la société Inside Secure. Un tel microcircuit possède deux broches pour connecter l'antenne, deux broches d'alimentation GND et VCC, et une broche d'entrée/sortie programmable IO. Lorsqu'une antenne est utilisée, comme pour le microcircuit maître 14a, les broches VCC et GND peuvent servir à alimenter d'autres circuits à partir de l'énergie fournie à l'antenne. Lorsqu'il n'y a pas d'antenne, comme pour le microcircuit esclave 14b, les broches VCC et GND peuvent servir à alimenter le microcircuit par une source externe (ici le microcircuit 14a).

Les microcircuits 14a et 14b sont conçus pour négocier une authentification mutuelle par une liaison sacrificielle L, matérialisée ici par trois pistes conductrices reliant les microcircuits et traversant la zone de rupture 17a. L'une des pistes peut, comme cela est représenté, présenter une boucle qui s'étend vers l'extrémité distale du ruban 10 au-delà d'une deuxième zone de rupture 17b.

Les microcircuits 14a et 14b peuvent être assemblés selon la technique dite « flip-chip » ou par collage avec une colle conductrice. Le microcircuit maître 14a intègre les fonctions de gestion du dispositif NFC. Le dispositif pouvant offrir une fonction d'authentification, il est de type actif, c'est-à-dire que le microcircuit 14a intègre un microcontrôleur et des fonctions de cryptographie. Le microcircuit 14a puise alors son alimentation de l'énergie fournie à l'antenne 12 par un lecteur NFC, qui peut être un smartphone, une tablette, une montre, etc. muni d'une interface NFC.

Le microcircuit esclave 14b, intégrant également un microcontrôleur et des fonctions de cryptographie, peut être alimenté par le microcircuit maître 14a. Comme précédemment indiqué, le microcircuit 14a peut avoir deux broches VCC et GND servant à alimenter d'autres circuits à partir de l'énergie fournie à l'antenne 12. Ces broches VCC et GND sont reliées à des broches d'alimentation correspondantes du circuit esclave 14b par des pistes conductrices formant partie de la liaison sacrificielle L entre les deux microcircuits. La liaison sacrificielle L est complétée par une piste de communication qui relie une broche d'entrée/sortie IO du microcircuit 14a à une broche correspondante du microcircuit 14b. L'une quelconque des pistes de la liaison sacrificielle, ici la piste d'alimentation GND, peut former la boucle qui traverse la zone de rupture 17b.

Avec cette configuration, lorsqu'un lecteur, tel qu'un smartphone d'un consommateur, est approché de l'antenne 12, le microcircuit 14a est alimenté. L'alimentation est transmise au microcircuit 14b par la liaison sacrificielle L, de sorte que les deux microcircuits démarrent leurs fonctions programmées.

Le microcircuit maître 14a peut être programmé pour, au démarrage, initier une authentification mutuelle avec le microcircuit esclave 14b par la ligne IO. Le microcircuit esclave 14b est alors programmé pour, au démarrage, attendre la requête d'authentification sur la ligne IO et y répondre par cette même ligne.

Si l'authentification mutuelle réussit, le microcircuit 14a peut indiquer au lecteur que le produit est intègre. Le consommateur pourra alors procéder à une authentification externe, utilisant des clés contenues dans le microcircuit maître 14a, servant à confirmer que le produit est conforme aux informations fournies par l'étiquette via un serveur d'authentification et une application dédiée. Il pourra en outre, à l'aide de la même application ou une application générique, consulter les caractéristiques du produit, même si l'authentification mutuelle a échoué, incluant le type d'informations pouvant figurer sur une étiquette papier d'une bouteille de vin. Plusieurs bouteilles d'un même lot pourront avoir des étiquettes partageant un même identifiant ou clé.

L'étiquette est conçue pour être fixée sur un conteneur, par exemple une bouteille, de sorte que la partie centrale du ruban soit placée en travers d'un élément de fermeture 18 du conteneur, par exemple un bouchon. On souhaite que le ruban soit rompu, en provoquant également la rupture d'au moins une piste traversant l'une quelconque des zones de rupture 17a, 17b, lorsque la bouteille est ouverte, c'est-à-dire lorsque le bouchon 18 est retiré.

Une rupture de l'une quelconque des pistes traversant la zone 17a ou 17b compromet le fonctionnement du microcircuit esclave 14b, soit par l'interruption de son alimentation (pistes VCC et GND), soit par la coupure de la liaison servant à effectuer l'authentification mutuelle (piste IO). Dans tous les cas, le microcircuit 14b reste muet au démarrage du microcircuit 14a, faisant échouer l'authentification mutuelle.

Les pistes étant généralement réalisées en aluminium, cela rend difficile la réparation des pistes sectionnées par soudure ou brasure du fait de la couche d'oxyde isolante qui se forme sur l'aluminium dès son exposition à l'air.

Avec un équipement approprié, une personne mal intentionnée peut cependant recréer des connexions manquantes sur un fragment d'étiquette, par exemple en court-circuitant deux segments de piste appartenant à une boucle qui a été interrompue à la rupture de l'étiquette. Si le fonctionnement de l'étiquette repose sur la continuité de la boucle, sa sécurité se trouve alors compromise.

La sécurité de l'étiquette de la figure 1 repose notamment sur l'établissement d'une authentification mutuelle entre les microcircuits 14a et 14b. Si l'étiquette a été rompue par la zone 17a, une personne mal intentionnée se heurte à plusieurs difficultés pour recréer une étiquette opérationnelle. Elle doit d'abord savoir qu'un seul des fragments de l'étiquette, même celui avec le microcircuit maître 14a entièrement opérationnel, ne suffit pas à obtenir une étiquette opérationnelle. Elle doit ensuite posséder les deux fragments, et rétablir les connexions entre les deux fragments. Or, même avec un équipement sophistiqué, il est particulièrement difficile de rétablir de façon durable les connexions entre des pistes de deux fragments d'étiquette.

Si d'aventure une étiquette du type de la figure 1 était rompue seulement par la zone 17b, le microcircuit 14b ne serait plus alimenté du fait de la rupture de la boucle de la piste GND. Le fragment d'étiquette comprenant les microcircuits 14a, 14b pourrait cependant être réparé en court-circuitant les segments interrompus de la piste GND.

Pour compromettre ce type de réparation, le microcircuit 14b peut être placé au-delà de la zone 17b, comme cela est représenté en pointillés, de sorte que la liaison sacrificielle L, c'est-à-dire les pistes d'alimentation VCC, GND et la piste de communication IO, traverse les deux zones de rupture 17a et 17b.

Pour favoriser la rupture de l'étiquette, la fixation du ruban sur le conteneur est conçue pour présenter une résistance de rupture supérieure à la résistance de rupture du ruban. Une résistance de fixation élevée peut être obtenue par collage, et la résistance requise peut être garantie en collant le ruban sur une surface suffisante.

On peut également diminuer la résistance de rupture du ruban en prévoyant, comme cela est représenté, des amorces de rupture 20 dans les zones 17a, 17b. De préférence, ces amorces sont situées à la limite de la zone de collage du ruban, ce qui provoque une concentration de contraintes qui favorise la rupture.

Le ruban peut être collé sur le conteneur par la face sur laquelle sont formées la majorité des pistes conductrices. L'adhérence par collage des pistes sur le conteneur est généralement plus élevée que l'adhérence des pistes sur le ruban. Il en résulte que toute tentative de décollage de l'étiquette entraîne l'arrachement des pistes conductrices, qui restent collées au conteneur.

Une étiquette NFC anti-contrefaçon du type de la figure 1 est efficace pour identifier des bouteilles qui ont été débouchées et potentiellement re-remplies avec un produit d'origine douteuse. Elle ne permet toutefois pas de détecter le prélèvement ou le remplacement de contenu à l'aide d'une seringue, par exemple selon le procédé Coravin™ qui consiste à transpercer le bouchon à l'aide d'une seringue et à aspirer le contenu en injectant un gaz inerte dans la bouteille. Une telle technique laisserait l'étiquette intacte.

La figure 2 illustre un mode de réalisation d'étiquette NFC permettant une détection de tentative de perçage du bouchon. La zone centrale du ruban 10 destinée à recouvrir le bouchon est élargie pour occuper la surface du bouchon et du goulot de la bouteille. L'une des pistes de la liaison sacrificielle, ici la piste GND, présente, dans la zone d'intérêt à protéger, une configuration en créneaux resserrés 22 occupant toute la surface de cette zone.

Comme cela est représenté, en partant du microcircuit 14a, la piste GND peut traverser le substrat par un via, s'étendre sur la face arrière du substrat jusqu'à l'extrémité distale du ruban, et revenir sur la face avant par un autre via.

Le pas des créneaux est de préférence inférieur au diamètre de l'aiguille pouvant servir au perçage, de sorte que l'insertion de l'aiguille brise la piste en au moins un endroit, coupant l'alimentation du microcircuit 14b.

Si le segment de piste crénelé 22 ne peut pas être configuré avec un pas suffisamment petit, le segment de piste situé sur la face arrière du substrat peut être configuré selon des créneaux complémentaires, ce qui divise virtuellement le pas par deux.

La figure 3 illustre un autre mode de réalisation d'étiquette NFC permettant une détection de tentative de perçage du bouchon. La zone centrale du substrat recouvrant le bouchon 18 et le goulot de la bouteille comprend deux plages métalliques en regard, l'une 30 formée sur la face arrière du substrat (en grisé) et l'autre 31 sur la face avant du substrat (en noir). Les plages n'ont pas été représentées aux mêmes dimensions pour pouvoir les distinguer sur la figure - en pratique elles sont aux mêmes dimensions et remplissent le plus possible la zone d'intérêt correspondant à la face supérieure du bouchon.

L'une des plages, ici la plage 31, peut être connectée à la piste GND. L'autre plage 30 peut être reliée à la piste IO. Ainsi, lorsque les plages sont court-circuitées, la piste IO se trouve connectée à la ligne d'alimentation GND, rendant toute communication entre les microcircuits impossible. Les deux plages peuvent être connectées de diverses autres manières entraînant l'inactivation du microcircuit 14b. Par exemple, si le microcircuit 14b possède une borne de réinitialisation, les plages peuvent être connectées pour forcer la réinitialisation lorsqu'elles sont court-circuitées.

La zone centrale de l'étiquette peut être collée par toute sa surface sur le bouchon. Toute tentative d'accès au bouchon se solde alors par le perçage des deux plages métalliques en regard. Lors du perçage, le substrat en matière plastique entre les deux plages métalliques se comprime de manière permanente, tandis que le métal de la plage supérieure s'étire, en suivant le mouvement de l'objet perçant (une aiguille ou un tirebouchon), pour atteindre la plage inférieure. La plage inférieure, du fait qu'elle est retenue par une couche de colle, généralement plus dure que le substrat, se déforme moins que la plage supérieure. Il en résulte un sertissage de la zone déformée de la plage supérieure dans la plage inférieure, et donc que les deux plages se retrouvent en court-circuit permanent, même à l'extraction de l'objet perçant. Ce court-circuit se produit également si les plages du condensateur sont en aluminium, car cet aluminium est mis en oeuvre à la fabrication dans une atmosphère inerte empêchant la formation d'oxyde, et les zones mises en contact des deux plages restent dépourvues d'oxyde du fait qu'elles sont protégées par le substrat.

Les étiquettes des figures 2 et 3 peuvent détecter deux événements, à savoir la rupture de l'étiquette et le percement du bouchon. Les deux événements ont le même résultat, à savoir la cessation de la communication entre les deux microcircuits 14a et 14b. Ainsi, l'utilisateur sait que le produit a été compromis, mais il ne sait pas comment.

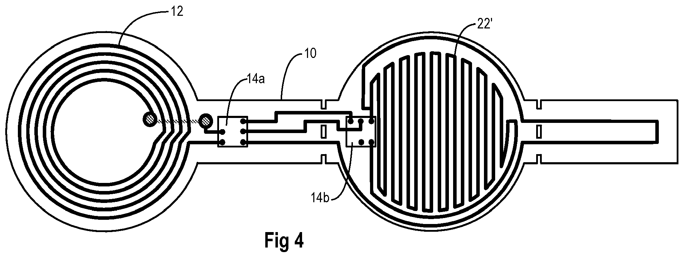

La figure 4 représente une variante de l'étiquette de la figure 2 permettant de discriminer ces deux événements. Le microcircuit 14b peut posséder une deuxième borne d'entrée sortie. Dans ce cas, le segment de piste crénelé 22' est formé indépendamment de la piste GND. Le segment 22' est alors connecté entre l'une des bornes d'alimentation, par exemple GND, et la deuxième borne d'entrée/sortie du circuit 14b, comme cela est représenté.

Avec cette configuration, la rupture du segment crénelé 22' n'empêche pas le fonctionnement du microcircuit 14b, mais change l'état de sa deuxième borne d'entrée/sortie. Le microcircuit 14b peut être programmé pour détecter ce changement d'état et le communiquer au microcircuit maître 14a par la ligne IO. Le microcircuit maître peut alors signaler l'événement au consommateur par le lecteur NFC. La rupture de l'étiquette est détectée comme précédemment, par l'absence de réponse du microcircuit esclave.

De nombreuses variantes et modifications des modes de réalisation décrits ici apparaîtront à l'homme du métier. Le microcircuit esclave 14b pourrait posséder sa propre antenne NFC et ainsi être alimenté par le même champ que celui qui alimente le microcircuit maître 14a. Dans ce cas, la ligne VCC entre les deux microcircuits pourrait être omise. Cette variante peut offrir un degré de sécurité supplémentaire en ce que les antennes des deux microcircuits doivent être suffisamment proches l'une de l'autre pour être alimentées par le même lecteur.

Le microcircuit esclave 14b pourrait posséder une autre technologie de communication sans contact, par exemple RF de type UHF. L'étiquette peut alors offrir deux modes de lecture, par NFC ou RF.

Les étiquettes décrites ici sont également utilisables sur des conteneurs ou des éléments de fermeture métalliques, en munissant la face inférieure de l'étiquette au niveau de l'antenne d'une couche d'isolant électromagnétique, comme de la ferrite.

## Revendications

1. Etiquette anti-contrefaçon à couplage magnétique en champ proche, comprenant :
• un substrat (10) comprenant une zone de rupture (17a) ;
• un microcircuit maître (14a) agencé sur le substrat d'un côté de la zone de rupture, et configuré pour être interrogé par un lecteur en champ proche ;
• un microcircuit esclave (14b) agencé sur le substrat de l'autre côté de la zone de rupture : et
• une liaison sacrificielle (L) reliant les deux microcircuits, **caractérisée en ce que** les deux microcircuits sont conçus pour négocier une authentification mutuelle par la liaison sacrificielle.

2. Etiquette selon la revendication 1, comprenant une antenne (12) agencée pour alimenter le microcircuit maître (14a), la liaison sacrificielle (L) étant conçue pour alimenter le microcircuit esclave à partir du microcircuit maître.

3. Etiquette selon la revendication 2, dans laquelle la liaison sacrificielle (L) comprend une piste conductrice (GND) configurée en une boucle passant par une deuxième zone de rupture (17b).

4. Etiquette selon la revendication 2, dans laquelle la liaison sacrificielle (L) comprend une piste conductrice (GND) configurée en créneaux occupant une zone d'intérêt du substrat de manière qu'un transpercement de la zone d'intérêt brise la piste conductrice.

5. Etiquette selon la revendication 2, comprenant deux plages métalliques (30, 31) disposées en regard sur les faces opposées du substrat dans une zone d'intérêt du substrat, configurées de manière qu'un transpercement de la zone d'intérêt provoque un court-circuit permanent entre les deux plages métalliques, les plages métalliques étant connectées au microcircuit esclave de manière que le court-circuit empêche le fonctionnement du microcircuit esclave.

6. Etiquette selon la revendication 1, dans laquelle les deux microcircuits (14a, 14b) sont de même type, chacun comprenant deux broches spécifiques (VCC, GND) conçues pour alimenter un circuit externe lorsque le microcircuit est connecté à une antenne, ou pour recevoir une alimentation externe lorsque le microcircuit n'est pas connecté à une antenne.

7. Etiquette selon la revendication 1, dans laquelle le microcircuit maître (14a) est conçu pour mettre en oeuvre une technologie de communication en champ proche et le microcircuit esclave (14b) est conçu pour mettre en oeuvre une technologie de communication différente.

## Patentansprüche

1. Fälschungssicheres Etikett mit einer Nahfeldmagnetkupplung, umfassend:
• ein Substrat (10), das eine Bruchzone (17a) umfasst;
• eine Master-Mikroschaltung (14a), die auf einer Seite der Bruchzone auf dem Substrat angeordnet und derart konfiguriert ist, um von einem Nahfeldleser abgefragt zu werden;
• eine Slave-Mikroschaltung (14b), die auf der anderen Seite der Bruchzone auf dem Substrat angeordnet ist; und
• eine Opferverbindung (L), die die beiden Mikroschaltungen verbindet, **dadurch gekennzeichnet, dass** die beiden Mikroschaltungen dazu vorgesehen sind, eine gegenseitige Authentifizierung durch die Opferverbindung auszuhandeln.

2. Etikett nach Anspruch 1, umfassend eine Antenne (12), die angeordnet ist, um die Master-Mikroschaltung (14a) zu versorgen, wobei die Opferverbindung (L) dazu vorgesehen ist, von der Master-Mikroschaltung aus die Slave-Mikroschaltung zu versorgen.

3. Etikett nach Anspruch 2, wobei die Opferverbindung (L) eine Leiterbahn (GND) umfasst, die in einer Schleife konfiguriert ist, die durch eine zweite Bruchzone (17b) verläuft.

4. Etikett nach Anspruch 2, wobei die Opferverbindung (L) eine Leiterbahn (GND) umfasst, die in Schlitzen, die einen wichtigen Bereich des Substrats einnehmen, derart konfiguriert ist, dass ein Durchstoßen des wichtigen Bereichs die Leiterbahn zerbricht.

5. Etikett nach Anspruch 2, umfassend zwei Metallkontaktstellen (30, 31), die auf gegenüberliegenden Seiten des Substrats in einem wichtigen Bereich des Substrats angeordnet sind und derart konfiguriert sind, dass ein Durchstoßen des wichtigen Bereichs einen permanenten Kurzschluss zwischen den beiden Metallkontaktstellen verursacht, wobei die Metallkontaktstellen mit der Slave-Mikroschaltung verbunden sind, sodass der Kurzschluss den Betrieb der Slave-Mikroschaltung verhindert.

6. Etikett nach Anspruch 1, wobei die zwei Mikroschaltungen (14a, 14b) vom gleichen Typ sind und jeweils zwei spezifische Pins (VCC, GND) umfassen, die dazu vorgesehen sind, eine externe Schaltung zu versorgen, wenn die Mikroschaltung mit einer Antenne verbunden ist, oder eine externe Versorgung zu empfangen, wenn die Mikroschaltung nicht mit einer Antenne verbunden ist.

7. Etikett nach Anspruch 1, wobei die Master-Mikroschaltung (14a) dazu vorgesehen ist, um eine Nahfeld-Kommunikationstechnologie zu implementieren, und die Slave-Mikroschaltung (14b) dazu vorgesehen ist, eine andere Kommunikationstechnologie zu implementieren.

## Claims

1. A near field magnetically coupled contactless tag, comprising:
• a substrate (10) comprising a rupture zone (17a);
• a master microcircuit (14a) arranged on the substrate on one side of the rupture zone, and configured to be interrogated by a near-field reader;
• a slave microcircuit (14b) arranged on the substrate on the other side of the rupture zone; and
• a sacrificial link (L) connecting the two microcircuits;
**characterized in that** the two microcircuits are configured to negotiate mutual authentication through the sacrificial link.

2. The tag according to claim 1, comprising an antenna (12) configured to supply power to the master microcircuit (14a), the sacrificial link (L) being configured to power the slave microcircuit from the master microcircuit.

3. The tag of claim 2, wherein the sacrificial link (L) comprises a conductive track (GND) configured in a loop crossing a second rupture zone (17b).

4. The tag according to claim 2, wherein the sacrificial link (L) comprises a meander-shaped conductive track (GND) occupying a region of interest of the substrate such that a piercing of the region of interest breaks the conductive track.

5. The tag according to claim 2, comprising two facing metal surfaces (30, 31) arranged on opposite faces of the substrate in a region of interest of the substrate, configured such that a piercing of the region of interest causes a permanent short-circuit between the two metal surfaces, wherein the metal surfaces are connected to the slave microcircuit so that the short-circuit prevents the operation of the slave microcircuit.

6. The tag of claim 1, wherein the two microcircuits (14a, 14b) are of the same type, each comprising two specific pins (VCC, GND) designed to supply power to an external circuit when the microcircuit is connected to an antenna, or to receive an external power supply when the microcircuit is not connected to an antenna.

7. The tag of claim 1, wherein the master microcircuit (14a) is configured to implement near field communication technology and the slave microcircuit (14b) is configured to implement a different communication technology.
